# DEMANDE DE BREVET EUROPEEN

(11) **EP 2 306 324 A1**
(43) Date de publication de la demande: **06.04.2011**
(21) Numéro de dépôt: 09305924.4
(22) Date de dépôt: 30.09.2009
(51) Int. Cl.: G06F 13/10, G06F 13/38

(54) **Procédé, système et dispositif d'adaptation permettant un échange de données entre un objet de communication et une unité de traitement**

(71) Demandeur: Gemalto SA, 92190 Meudon (FR)
(72) Inventeur: Capomaggio, Gregory, 13360 Roquevaire (FR)

(57) **Abrégé**

Procédé, système et dispositif d'adaptation permettant un échange de données entre un objet de communication et une unité de traitement.

L'invention concerne un dispositif d'adaptation (DA) pour permettre un échange de données entre un objet de communication (OC, OC1, OC2) et une unité de traitement (UT, 10, 20) ledit dispositif d'adaptation comprenant :
- des moyens de déclaration d'information (DI) pour déclarer à l'unité de traitement des informations de capacités techniques (CCID, MS) lui permettant de sélectionner un pilote / moyen de communication approprié,
- des moyens de traitement de données (µC1, C1, C2, C3), lesdits moyens étant aptes à effectuer une adaptation de protocole d'échange et/ou de formats de données à échanger entre l'unité de traitement et l'objet de communication;

Le dispositif d'adaptation se distingue en ce que lesdites capacités techniques déclarées par les moyens de déclaration sont relatives à un objet (OC, OC1, OC2) distinct du dispositif d'adaptation, lesdites capacités étant perçues par l'unité de traitement comme étant virtuellement relatives au dispositif d'adaptation (DA).

L'invention concerne également un système et procédé mettant en oeuvre le dispositif d'adaptation.

## Description

La présente invention concerne un procédé et système pour permettre un échange de données entre un dispositif de communication et une unité de traitement. Plus particulièrement, l'invention concerne un dispositif d'adaptation pour permettre cet échange de données.

L'invention trouve notamment application dans le marché de l'identification. Le marché de l'identification, plus connue sous l'acronyme "IAM" pour « Identity and Access Management », repose sur plusieurs technologies de pointe permettant, entre autres, aux utilisateurs de s'authentifier sur certains équipements informatiques de type ordinateur personnel, téléphone mobile, assistant personnel, etc.

Une de ces technologies consiste à utiliser une carte à puce sécurisée, rattachée à un et un seul utilisateur, contenant les informations nécessaires à l'authentification de celui-ci, telles que des certificats numériques, des clés de chiffrement, des mots de passe ou des informations biométriques.

Afin d'accéder aux informations ou à certaines applications contenues sur l'équipement informatique lui-même ou sur le réseau informatique local, l'utilisateur doit présenter sa carte à puce au système informatique. Le système informatique est alors en mesure de vérifier que les informations contenues dans la carte à puce sont bien celles de l'utilisateur réclamant les accès. Cette opération est appelée « authentification faible » de l'utilisateur.

Dans certains cas, un mot de passe ou une vérification biométrique supplémentaire est demandé par le système informatique afin de vérifier que le porteur de la carte à puce soit bien l'utilisateur en question. Cette opération est appelée « authentification forte » de l'utilisateur. Le type d'authentification dépend de la politique de sécurité mise en place pour une infrastructure dédiée.
La lecture des informations contenues dans la carte à puce est réalisée au travers d'un périphérique dédié que l'on appelle « lecteur de carte à puce ». Ce périphérique peut se présenter sous la forme d'un périphérique interne ou externe, la plupart du temps raccordé à l'équipement informatique au travers d'une connexion filaire comme la liaison USB ou la liaison RS232.

Dans certains environnements où la mobilité des utilisateurs est importante, l'utilisation de ce périphérique est fortement inadaptée. Ceci est le cas notamment des infrastructures hospitalières où le personnel soignant doit être en mesure de s'authentifier sur une multitude de postes de travail se trouvant dans l'enceinte de l'établissement, afin d'accéder à certaines données confidentielles comme les dossiers patient. Dans ce cas d'utilisation, la manipulation récurrente de la carte à puce devient fastidieuse, et peut conduire à une faille de sécurité si l'utilisateur oublie sa carte à puce insérée dans le lecteur, ce qui permettrait à une personne malveillante d'accéder par la suite aux mêmes informations.

Dans certains services spécialisés, la manipulation de la carte à puce et l'utilisation de lecteur est tout simplement proscrite afin d'éviter la propagation de certains germes pouvant se développer à l'intérieur du lecteur lui-même.

Afin de répondre à ces besoins, l'inventeur a imaginé des solutions de nouveaux périphériques pour permettre une authentification de l'utilisateur plus rapide, plus ergonomique tout en renforçant le niveau de sécurité.

Ces solutions consistent à équiper l'utilisateur d'un lecteur de carte à puce dit « mobile », dans lequel est insérée la carte à puce de celui-ci, pour communiquer avec un poste distant au travers d'une liaison radiofréquence courte ou moyenne portée comme le Bluetooth, le WiFi ou encore l'USB wireless.

Ce périphérique permet à l'utilisateur de se déplacer d'un poste de travail à l'autre tout en conservant le dispositif sur soi et sans avoir à manipuler la carte à puce. Pour communiquer avec le périphérique mobile, l'équipement informatique doit lui-même disposer d'une interface radiofréquence compatible.

Deux options ont été envisagées dans l'art antérieur pour communiquer avec le lecteur mobile de carte : soit l'équipement informatique possède un périphérique radiofréquence interne compatible auquel cas, il peut être utilisé pour communiquer avec le lecteur mobile ou dans le cas contraire, il est nécessaire d'étendre les interfaces de communication de l'équipement informatique, en ajoutant un périphérique externe, comme par exemple une clé USB - Bluetooth, USB - WiFi ou USB -USB Wireless.

Afin d'assurer l'interopérabilité entre les systèmes informatiques et les solutions basées sur la technologie carte à puce, plusieurs interfaces de communication applicatives, plus connues sous l'acronyme API, pour « Application Programming Interface », sont à ce jour standardisées et implémentées sur la plupart des systèmes.

Une de ces interfaces de communication applicatives, connue sous l'acronyme CCID de « Integrated Circuit(s) Cards Interface Device » pour "Dispositiif d'interface de carte à circuit intégrés", permet à tout équipement informatique d'accéder aux informations d'une carte à puce au travers d'un lecteur raccordé par une liaison USB. Dans ce cas précis, l'intégrateur du lecteur de carte à puce n'est à aucun moment contraint d'installer un pilote logiciel, appelé communément « driver », afin d'être reconnu par le système, si ce lecteur implémente une interface compatible avec la spécification CCID.

La plupart des systèmes d'exploitation comme Windows, Mac OS ou Linux, utilisés par la plupart des postes informatiques, intègrent par défaut cette interface CCID.

Par contre, il n'existe à ce jour aucune interface de communication applicative, standardisée ou déployée à grande échelle sur les équipements informatiques reposant sur les technologies sans fil.

Les périphériques de lecture de cartes à puce, basés sur des technologies de communication sans fil, tels que les lecteurs mobiles en cours de développement précédemment décrits, posent donc un réel problème d'interopérabilité.

Cela obligerait le fabricant de lecteur mobile à développer et installer son propre pilote logiciel sur un équipement informatique donné. Cette tâche devient d'autant plus complexe que le pilote logiciel devra être décliné en plusieurs versions selon le système d'exploitation utilisé, voir le modèle du périphérique physique présent sur l'équipement informatique ; ceci compliquant fortement la maintenance de la solution sur un parc informatique hétérogène.

Dans certains cas, le déploiement de ce type de solution peut être difficile, voire éventuellement impossible à réaliser. Ceci est le cas notamment des infrastructures informatiques dont les migrations ou mises à jour logicielles doivent être effectuées à grande échelle, impliquant d'importants couts d'intervention, ou doivent être limitées dans le cadre d'une politique particulière de sécurité afin de minimiser les incompatibilités logicielles causées par cette mise à jour.
D'une manière générale, l'inventeur pense qu'aujourd'hui, il y a un besoin de matériel informatique local capable de communiquer directement avec des dispositifs périphériques mobiles sans-fil. Par exemple, un ordinateur doit être capable de communiquer avec un périphérique, tel un badge intelligent, si on fournit une interface Bluetooth et NFC à ce périphérique.

En outre, de tels périphériques mobiles sans fil peuvent nécessiter des moyens pour établir rapidement et en sécurité la connexion avec l'ordinateur local.

En pratique, l'inventeur pense que le principe de fonctionnement ci-dessus a l'inconvénient de requérir des développements multiples notamment des logiciels d'adaptations « middleware » sur les équipements de traitement informatique selon les pilotes de communication sans fil moyenne/longue portée, les contrôleurs, pilotes sans-fil et système d'exploitation existants et développements de nouveaux services spécifiques d'appairage.

Par ailleurs, on connaît dans l'art antérieur, des dispositifs adaptateurs de communication, notamment des clés USB ou des cartes de communication insérables dans un port d'une unité de traitement hôte tel qu'un ordinateur, une imprimante, modem, ou équivalents et qui transforment des données reçues selon un protocole en un autre protocole compatible avec l'unité de traitement hôte.

Ces adaptateurs présentent en principe une connexion ou interface avec l'unité hôte telle une connexion USB, PCMCIA ainsi qu'une connexion ou interface de communication vers l'extérieur telle qu'une interface sans fil, radiofréquence NFC, Bluetooth, optique, infrarouge, etc.

Ces adaptateurs comportent généralement des moyens de traitement de données aptes à effectuer une adaptation de protocole d'échange et/ou adaptation de formats de données à échanger entre le dispositif portable et l'unité de traitement. Ils comportent également des moyens de déclaration pour renseigner l'unité de traitement sur des capacités techniques du dispositif portable, de manière à sélectionner des moyens appropriés de communication tels un pilote de communication. Selon le standard USB, ces capacités ou identifiants sont associées à des valeurs appelées "classes". Ainsi par exemple une clé USB / Bluetooth se déclare selon une classe correspondant à ses propres caractéristiques : un dispositif ayant une interface de communication Bluetooth.

L'invention a pour objectif de résoudre les problèmes ci-dessus.

L'invention a pour objectif général un procédé et système de communication entre des composants ou objets déportés et une unité de traitement.

L'invention a également pour objectif de développer un dispositif périphérique mobile sans-fil, notamment un porte badge, permettant à des composants déportés, tels une carte à puce, une carte multimédia, en relation avec le dispositif périphérique mobile de communiquer avec une unité de traitement tel un ordinateur local, via une liaison de communication sans-fil comme Bluetooth, WiFi, ZigBee, Ultra Wide Band, etc.

L'invention consiste, selon un mode de réalisation préféré, à utiliser un périphérique intermédiaire (adaptateur), disposé entre l'ordinateur local et le dispositif périphérique mobile sans-fil; L'adaptateur fournit au cours d'un échange avec l'ordinateur hôte, des caractéristiques « classiques », représentatives du dispositif mobile sans-fil et/ou composants associés et généralement supportées par l'ordinateur, notamment caractéristiques d'interface de carte à puce (CCID) et/ou de stockage de masse.

A cet effet, l'invention a pour objet un dispositif d'adaptation pour permettre un échange de données entre un objet de communication et une unité de traitement, ledit dispositif d'adaptation comprenant :
- des moyens de déclaration d'information pour déclarer à l'unité de traitement des informations de capacités techniques lui permettant de sélectionner un pilote / moyen de communication approprié,
- des moyens de traitement de données, lesdits moyens étant aptes à effectuer une adaptation de protocole d'échange et/ou de formats de données à échanger entre l'unité de traitement et l'objet de communication;
Le dispositif d'adaptation se distingue en ce que lesdites informations de capacités techniques déclarées par les moyens de déclaration sont relatives à un objet distinct du dispositif d'adaptation, lesdites capacités étant perçues par l'unité de traitement comme étant virtuellement relatives au dispositif d'adaptation

Selon d'autres caractéristiques, de l'invention:
- Lesdites capacités techniques et/ou de format de données sont supportées par l'objet de communication lui même;
- Lesdites capacités techniques et/ou de format de données sont supportées par un autre objet / composant en relation avec l'objet de communication;
- Lesdites capacités techniques et/ou de format de données qu'il déclare à l'unité de traitement sont relatives à un type d'interface de carte à puce (CCID) et/ou à des fonctionnalités de stockage de masse (MS), de manière à pouvoir être virtuellement perçu et considéré par l'unité de traitement comme ayant ces capacités et/ou ces fonctionnalités;
- Le dispositif d'adaptation comprend des moyens d'appairage du deuxième type de communication (BT).

L'invention a également pour objet un procédé d'adaptation pour permettre un échange de données entre un objet de communication et une unité de traitement, ledit procédé d'adaptation comprenant les étapes suivantes:
- de déclaration d'information pour déclarer à l'unité de traitement des informations de capacités techniques lui permettant de sélectionner un pilote / moyen de communication approprié,
- de traitement de données, lesdits moyens étant aptes à effectuer une adaptation de protocole d'échange et/ou de formats de données à échanger entre l'unité de traitement et l'objet de communication;
Le procédé se distingue en ce que ladite information de capacités techniques déclarée par les moyens de déclaration est relative à un objet distinct du dispositif d'adaptation, lesdites capacités étant perçues par l'unité de traitement comme étant virtuellement relatives au dispositif d'adaptation.

L'invention a également pour objet un système de communication entre un objet de communication et une unité de traitement, comprenant :
- un objet de communication ayant des capacités techniques et/ou étant apte à mettre en oeuvre un type de format de données,
- une unité de traitement apte à mettre en oeuvre ou sélectionner une communication appropriée en réponse à des informations reçues de capacités techniques et/ou de format de données mis en oeuvre ou supportés par l'objet de communication.

Ainsi, l'ordinateur hôte peut directement communiquer et échanger avec le périphérique en utilisant les pilotes génériques du système d'exploitation, sans requérir une installation de pilote spécifique.

Grâce à l'invention, aucun développement ou installation spécifique de pilote n'est requis sur l'ordinateur local. Aucune modification spécifique de logiciel « middleware » n'est requise dans l'unité de traitement.

La solution est directement utilisable pour un déploiement immédiat d'une solution main libre sur une infrastructure pour carte à puce actuelle. Le cas échéant même, l'invention peut être déployée sur des ordinateurs qui ne sont pas équipés d'interface de communication sans-fil. L'intégration de cette solution est aisée, immédiate et transparente pour l'utilisateur final.

D'autres particularités et avantages de l'invention apparaîtront à la lecture de la description, faite à titre d'exemple non limitatif et en regard des dessins annexés sur lesquels :
- La figure 1 illustre un système de communication conforme à un mode général de l'invention;
- La figure 2 illustre un dispositif adaptateur conforme à un mode de réalisation de l'invention;
- La figure 3 illustre un système de communication conforme à un autre mode de réalisation de l'invention;
- La figure 4 illustre un système de communication conforme à un mode sécurisé et plus complet de l'invention.

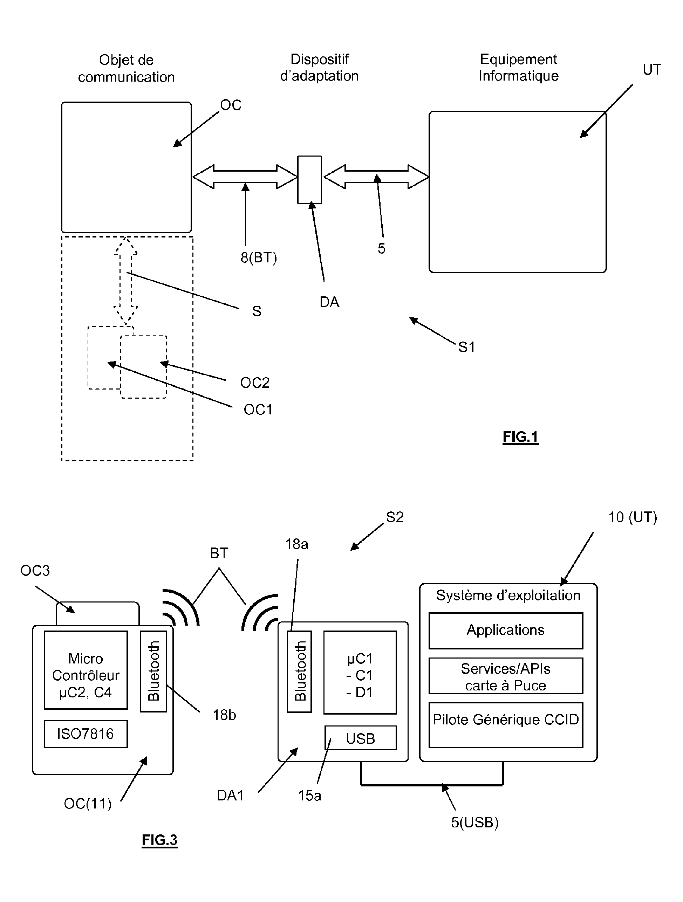

A la figure 1, un système de communication S1 selon un mode de réalisation général de l'invention, comprend une unité de traitement UT, un objet de communication OC et un dispositif adaptateur DA. Le cas échéant, (en pointillé), le système peut comprendre au moins un composant OC1, OC2 en relation avec cet objet de communication. A cet effet, une communication est établie entre l'objet OC ou OC1, OC2 et l'unité de traitement à travers cet adaptateur DA via des canaux de communications 6, 5. Les canaux peuvent être à contacts ou sans fil, etc.

Un objet de communication, en l'occurrence dans l'exemple, un lecteur de carte peut être tout objet communicant disposant d'une mémoire et d'une interface 6 de communication; Par exemple, il peut être une carte à puce à contact ou sans contact, une étiquette électronique, un lecteur, une clé intelligente, une montre, un cadre photo numérique, un téléphone, un appareil photo, une caméra vidéo, une imprimante à lecteur de carte(s) ou non.

Ces objets ou composants ont chacun des capacités techniques propres et mettent en oeuvre des protocoles d'échange de données spécifiques; Les composants sont de préférence des cartes insérées dans l'objet de communication, telles une carte ISO 7816 ou carte à mémoire de masse, mais ils peuvent être du même type que l'objet de communication OC.

L'unité de traitement ou équipement informatique UT est apte à mettre en oeuvre ou sélectionner une communication appropriée en réponse à des informations relatives à des capacités techniques et reçues d'un périphérique; Ceci est le cas notamment de la procédure de déclaration du bus de communication USB, permettant à l'unité de traitement de sélectionner un pilote "driver" et donc un jeu de commande associé selon la classe d'objet du dispositif se déclarant.

L'unité de traitement dotée d'une interface de communication 5 (BT) avec l'extérieur, en l'occurrence un ordinateur personnel ou équipement informatique PC, peut être toute unité de traitement, tel que PDA, un téléphone, un appareil photo, une camera vidéo, une imprimante, etc.

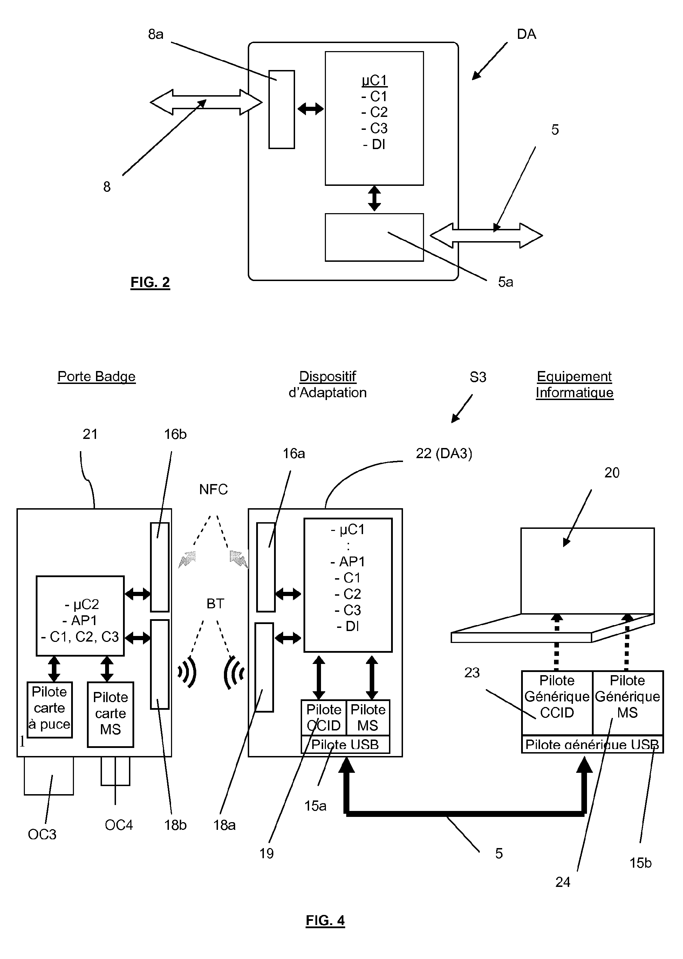

Le dispositif d'adaptation permet à l'équipement informatique de communiquer avec l'objet OC et/ou un ou des composants OC1, OC2 en relation avec cet objet. Le dispositif d'adaptation DA est décrit ci-dessous en relation avec la figure 2.

A la figure 2, le dispositif d'adaptation dans l'exemple est une clé USB avec une interface physique Bluetooth 8a et une interface physique USB 5a filaire ou non. II peut toutefois comprendre d'autres types d'interface supplémentaires ou à la place, telles que infrarouge, NFC, à contact électrique ou non, identique ou non, de part et d'autre. La communication avec l'extérieur, et notamment l'objet OC, est de type Bluetooth et avec l'unité de traitement USB. L'adaptateur est de préférence à proximité de l'unité de traitement tandis que l'objet portable est plus éloigné.

Plus particulièrement, le dispositif d'adaptation DA est apte à effecteur des opérations permettant un échange compréhensible de données entre l'objet de communication OC et l'unité de traitement UT et /ou inversement. II comprend à cet effet des moyens de traitement de données (µC); Les moyens µC1 peuvent comprendre ou constituer un microcontrôleur ou moyens équivalents câblés sans processeur ou intégrés à processeur.

Conformément à un mode préféré, ces moyens sont aptes en particulier à effectuer une adaptation de protocole d'échange et/ou adaptation de formats de données à échanger, entre l'objet de communication OC et l'unité de traitement UT notamment en vertu de l'exécution d'au moins un programme C1, C2, C3..Cn de transcription de protocole / extraction / encapsulation / transfert de données échangées.

Ce dispositif DA comprend également des moyens de déclaration d'information DI pour renseigner l'unité de traitement sur une information comprenant ou représentant des capacités techniques et/ou des formats de données, de manière à provoquer une sélection d'un pilote de communication approprié dans l'unité de traitement et communiquer plus amplement notamment avec le dispositif d'adaptation.

Cette information DI peut être une valeur stockée en mémoire du microcontrôleur ou une mémoire lui étant associée, représentative des capacités techniques ou appartenance à une catégorie d'appareil susceptible d'être reconnue par l'unité de traitement selon un standard. Pour une communication (et standard) USB, l'information peut correspondre à la valeur de la classe d'un appareil. Le cas échéant, l'information peut être au niveau de l'interface 5a de l'adaptateur avec l'unité de traitement.

De même, le système d'exploitation de l'unité de traitement (fig.3) notamment "Windows XP" comprend d'office les pilotes correspondant aux différentes classes déclarées.

Selon une caractéristique d'un mode général préféré de l'invention (Fig. 1) l'information DI ci-dessus renseignée ou déclarée par le dispositif d'adaptation DA à l'unité de traitement UT, est relative à l'objet de communication OC, ou à au moins un composant OC1, OC2 en relation avec cet objet comme décrit ci-dessous.

Les capacités sont perçues par l'unité de traitement comme étant virtuellement relatives au dispositif d'adaptation alors qu'elles appartiennent à un objet distinct. L'unité de traitement dialogue avec le dispositif DA comme s'il avait ces capacités techniques ou comme s'il appartenait à la catégorie d'appareil déclarée.

Le dispositif d'adaptation DA est apte à analyser les différents échanges entre l'objet de communication OC et l'unité de traitement UT afin de conserver le contexte de communication en cours. Selon le mode de réalisation, le dispositif DA peut ou non intercepter et répondre à certaines requêtes envoyées par l'unité de traitement UT lorsque la connexion avec l'objet de communication OC est rompue. Dans la plupart des cas, une notification est renvoyée par le dispositif d'adaptation pour informer que le requête et rejetée, et/ou que l'objet de communication n'est temporairement plus accessible. Ceci est le cas notamment d'échanges de types commandes / réponses, où le pilote de l'unité de traitement reste en attente d'une réponse du périphérique.

Selon un premier mode de réalisation, les capacités techniques ou de format de données sont supportées par un autre appareil / objet / dispositif mis en relation avec ou constituant l'objet de communication OC. Ce mode peut correspondre à un cas particulier préféré de l'invention selon lequel l'objet de communication est par exemple, un lecteur de carte à puce ISO 7816 et/ou de carte à mémoire de masse par exemple de type SD comme illustré par la suite;

Dans l'exemple préféré, l'information DI relatives à des capacités techniques et/ou de format de données, déclarée à l'unité de traitement est spécifique à un type d'interface de carte à puce (CCID) et/ou à des fonctionnalités de stockage de masse (MS). Ainsi, l'adaptateur, mis à proximité, peut être virtuellement perçu et considéré par l'unité de traitement comme ayant les capacités et/ou les fonctionnalités d'un appareil ou objet disposé à distance de l'unité de traitement.

Selon un second mode de réalisation, l'objet de communication supporte lui-même lesdites capacités techniques ou de format de données. Par exemple, l'objet peut être un appareil comportant une puce de type puce de carte à puce soudée ou fixée à demeure dans l'appareil, une carte à mémoire soudée, un disque dur....

Dans d'autres modes, l'objet OC peut être une carte ou dispositif quelconque distant ou non et communicant lui-même, notamment par voie Bluetooth et/ou radiofréquence NFC ou selon ISO 14443.

La figure 3 représente un autre exemple d'implémentation préféré d'un système S2 conforme à l'invention, utilisant un lecteur de carte à puce mobile ayant une interface radiofréquence "Bluetooth".

L'objectif de cet exemple vise à proposer une solution permettant d'acheminer des données ou codes entre un équipement informatique 10 et un lecteur de carte à puce mobile 11, par le biais d'un dispositif d'adaptateur DA1 ou périphérique USB dit « d'adaptation ».

Cet adaptateur DA1 comprend avantageusement des interfaces de communication compatibles avec les interfaces de communication applicatives standards déployées à ce jour et notamment une interface avec l'unité de traitement. II comprend notamment selon un mode de réalisation, une liaison sans-fil de courte ou moyenne portée (BT) et une interface 15a avec l'équipement informatique.

Dans cet exemple, l'adaptateur DA1 est équipé d'une interface filaire USB esclave 15a permettant d'échanger des trames de données avec l'équipement informatique maitre, les trames étant formatées conformément à la spécification CCID. II comprend également une interface radiofréquence 18a permettant d'échanger des trames de données avec le périphérique distant mobile 11 ou OC3, et formatés conformément à la spécification Bluetooth). II comprend un microcontrôleur µC1 dont le rôle est d'encapsuler / décapsuler et transférer les trames de données entre l'interface filaire et radiofréquence.

Selon ce mode de l'invention, l'adaptateur DA1 présente une interface de communication applicative 19 compatible avec la spécification CCID. L'adaptateur se présente ainsi au système informatique comme étant lui-même virtuellement un lecteur de carte à puce. II transmet notamment un code de la classe correspondant au lecteur de carte à puce les informations de paramétrage de la couche protocolaire, ainsi que les différentes caractéristiques logicielles et/ou physiques dudit dispositif qui sont interprétées par l'unité de traitement pour sélectionner le pilote et/ou interface physique nécessaires.

Le périphérique mobile 11 comprend donc un lecteur de carte à puce portable, dans lequel est insérée la carte à puce de l'utilisateur OC3. Le lecteur retransmet les échanges entre la carte à puce et le système informatique distant par l'intermédiaire d'une interface sans-fil "Bluetooth" 16b.

Selon un fonctionnement de cet exemple, le dispositif adaptateur DA1 encapsule les données du protocole CCID, destinées au lecteur, dans le protocole utilisé par la liaison sans-fil courte ou moyenne portée (Bluetooth). Cette opération est réalisée ici par le microcontrôleur µC1 de l'adaptateur ou de manière équivalente par un transcripteur de protocole ou moyen d'encapsulation de format de données et/ou la mise en oeuvre d'une couche applicative réalisant cette opération. Une trame complète conforme ici au protocole CCID est ensuite transmise par voie radiofréquence jusqu'au lecteur mobile 11 de la carte à puce OC3. Cette opération est appelée «encapsulation" (tunneling) des trames CCID.

En parallèle, le lecteur DA1 de carte à puce mobile comporte une interface de courte et moyenne portée (Bluetooth) 18b et des moyens de traitement µC2, programme C4 pour respectivement récupérer et décapsuler les trames reçues de l'adaptateur, afin de les transmettre à son tour à la carte à puce OC3.
A l'inverse, des trames au protocole CCID de l'objet de communication OC ou notamment de la carte à puce OC3 à destination de l'unité de traitement 10 peuvent être encapsulées par les moyens µC2, C4 pour être transmises ou véhiculées via l'interface Bluetooth 18b à destination de l'unité de traitement. Ces trames sont ensuite récupérées par l'interface Bluetooth 18a de l'adaptateur DA1, puis extraites ou décapsulées par les moyens de traitement µC1, programme C1 qui peuvent être du même type (ou équivalent) que ceux UC2, C4 de l'objet de communication.

Les trames au protocole ou format CCID sont ensuite transmises via l'interface USB par l'adaptateur DA1 à l'unité de traitement 10; L'unité de traitement aura au préalable sélectionné le pilote ou l'application standard apte à interpréter les trames CCID notamment lors de la première connexion de l'adaptateur à l'unité de traitement.

L'invention permet de rendre entièrement transparente (ou inexistante) la communication sans-fil de courte ou moyenne portée entre l'objet de communication et l'unité de traitement. Cela s'effectue sans modification applicative de l'unité de traitement puisque l'invention utilise des interfaces de communication applicatives standards, supportées par l'unité de traitement, telles que l'USB et le CCID.

Dans cet exemple, l'équipement informatique 10 est constitué des briques logicielles standardisées notamment applications, services/ APIs carte à puce, pilote générique CCID, sans aucun ajout d'application ou pilote nécessaire à la mise en oeuvre de la communication avec l'objet de communication OC ou OC3.

A la figure 4, selon un mode plus sécurisé et étendu de l'invention, le système S3 (ou procédé) permet de communiquer en mettant en oeuvre une étape de sécurité d'une première communication sans fil avec un objet distant et le cas échéant, directement ou non avec des objets de type différent OC3, OC4 et/ou par l'intermédiaire ou non d'un objet de communication OC. L'étape de sécurité peut toutefois être mise en oeuvre même avec un seul objet parmi OC, OC1, OC2, OC3, OC4.

Pour la sécurité, l'invention met en oeuvre des moyens pour initier et/ou établir un deuxième type de communication (BT) entre l'adaptateur et le dispositif ou objet de communication lui étant associé. Ainsi, plutôt que prévoir des moyens équivalents de sécurité au niveau de l'unité de traitement 20, ce qui rendrait complexe l'opération de sécurité (nouveau pilote, nouvelle application notamment d'appairage...), ces moyens de sécurité sont prévus entre l'objet de communication et l'adaptateur.

Selon un mode de réalisation de la sécurité, l'invention comprend des moyens d'appairage AP1 du deuxième type de communication (BT). D'autres moyens de communication sécurisés peuvent être prévus tels que par exemple, la saisie d'un code secret par l'utilisateur si les dispositifs sont équipés d'une interface utilisateur de type afficheur et clavier, et le cas échéant des chiffrements /déchiffrements des données échangées.

Selon un mode préféré, les moyens d'appairage mettent en oeuvre ou utilisent un troisième type de communication (NFC) courte / moyenne portée. Un échange de secret et/ou de clé intervient entre l'adaptateur et l'objet associé via cette communication courte portée (NFC) pour sécuriser la deuxième communication BT entre l'adaptateur et l'objet de communication. De préférence, le troisième type de communication (NFC) a une portée inférieure à celle du deuxième type de communication (BT).

L'objet de communication 21 comprend un lecteur de cartes OC3, OC4, un lien de communication sans-fil (Bluetooth) 18b, une liaison de communication (NFC) de courte portée 16a,. Dans l'exemple, le lecteur est en fait un porte badge, le badge étant sous forme de carte à puce OC3.

L'adaptateur comporte des moyens équivalents ou identiques décrits à la figure précédente, (les mêmes références indiquant les mêmes moyens) également un lien de communication sans fil (Bluetooth) 18a, une liaison de communication (NFC) de courte portée 16a et une liaison 15a de communication 5 notamment USB avec l'ordinateur hôte 20, un microcontrôleur µC2, des pilotes de carte à puce et carte à mémoire de masse MS.

L'adaptateur comprend également un ou plusieurs microprogrammes AP1, C1, C2, C3, C4, et est en charge de gérer une séquence complète d'appairage NFC avec le lecteur de carte 21 (qui comporte de son côté des moyens complémentaires AP2), de démarrer une connexion Bluetooth sécurisée avec le lecteur, de transmettre les informations DI de déclaration CCID et/ou de stockage de masse MS à l'unité de traitement et d'échanger des paquets de données ou trames entre le lecteur et l'ordinateur hôte C1, C2.
Ces programmes permettent comme précédemment d'effectuer une opération d'encapsulation au protocole Bluetooth / désencapsulation du protocole Bluetooth des trames respectivement envoyées / reçues, que ces dernières soient au format carte à puce ou au format mémoire de masse SD.

Au cours de l'étape de déclaration, comme précédemment, l'adaptateur déclare à l'ordinateur hôte des informations relatives à un type d'interface de carte à puce (CCID) et cette fois aussi des fonctionnalités de stockage de masse (MS).

L'ordinateur hôte ayant activé les pilotes génériques 23, 24 ou applications correspondantes suite à la déclaration, il est capable de communiquer immédiatement avec l'objet de communication distant sans ajout supplémentaire de pilote. Ainsi, l'ordinateur hôte peut directement communiquer et échanger avec le lecteur de cartes à puce et de type SD en utilisant les pilotes génériques du système d'exploitation (aucune installation du pilote spécifique n'est nécessaire).

Selon ce principe de fonctionnement, l'ordinateur hôte "perçoit" juste un lecteur de carte à puce et/ou un disque dur ou mémoire de masse branché sur son port USB 15b.

Le procédé pour permettre un échange de données entre un objet de communication et une unité de traitement comprend une étape de déclaration à l'unité de traitement, pour renseigner l'unité de traitement sur des capacités techniques et/ou de format de données de manière à mettre en oeuvre une communication appropriée.

L'adaptateur comprend des moyens de déclaration d'information DI préétablis ou réglables, notamment par l'utilisateur, en fonction de l'objet de communication à associer à l'adaptateur 21. Ces moyens de déclaration peuvent être automatiques, par exemple, suite à un échange avec un objet de communication associé OC, OC3, OC4, l'objet peut notamment déclarer ses caractéristiques à l'adaptateur par une des interfaces disponibles.

Alternativement, l'utilisateur peut sélectionner sur l'adaptateur un fonctionnement et/ou des valeurs représentatives des caractéristiques (classe de l'objet de communication), voire charger des programme (sécurité, pilote...) en rapport avec l'objet de communication associé. L'information de déclaration peut aussi être déclenchée notamment par la détection dans le lecteur de l'insertion ou présence d'une carte quelconque ou autre objet en relation avec le lecteur. Dans l'exemple, l'adaptateur a été programmé en usine avec des informations à déclarer correspondant aux types de cartes ISO 7816 et SD destinées à être inséré dans le porte badge.

Ainsi, lors de la connexion de l'adaptateur avec l'unité de traitement, l'adaptateur déclare par transmission à l'unité de traitement, une information DI relative aux capacités techniques ou de format de données relatives à un type d'interface de carte à puce (CCID) et/ou à des fonctionnalités de stockage de masse (MS).

Ainsi, l'adaptateur est virtuellement perçu et considéré par l'unité de traitement comme ayant les capacités et/ou les fonctionnalités d'une carte ISO ou d'une carte mémoire de masse SD ou plus exactement comme un lecteur de carte ISO ou carte SD. L'ordinateur peut alors mettre en oeuvre des pilotes / interfaces logicielles et/ou physiques correspondants.

Au cours de la communication avec l'unité de traitement, l'adaptateur procède à un traitement transparent de données, consistant à effectuer comme précédemment, une adaptation de protocole d'échange et/ou adaptation de format de données à échanger. L'adaptateur reçoit par exemple, de l'unité hôte 20 des trames ou paquets de données au format carte à puce ISO 7816 ou destinées à une carte à puce ISO 7816.

L'adaptateur procède ensuite à une opération d'adaptation de protocole et/ou de format de données. Les trames reçues de l'unité de traitement 3 sont encapsulées au format ou selon le protocole de communication existant entre l'adaptateur et l'objet associé, notamment ici dans l'exemple, le protocole Bluetooth. Une autre communication de type à contact n'est toutefois pas exclue.

Les trames de données conformes à l'ISO 7816 ou adaptées à l'interface CCID sont encapsulées et transmis par l'adaptateur via son interface Bluetooth.
Les données encapsulées sont reçues par l'objet de communication associé ici le lecteur porte badge, sur son interface Bluetooth et traitées par lui de manière à extraire les données encapsulées et les transmettre à la carte à puce ISO 7816.

L'invention procède de manière similaire pour les données destinées à la carte SD. L'unité hôte met en oeuvre les moyens correspondants notamment, le pilote standard MS, mémoire de masse ou disque dur. De même, l'adaptateur effectue l'opération d'encapsulage et de désencapsulage des trames au format mémoire de masse MS.

Le lecteur porte-badge procède de manière similaire à un encapsulage / désencapsulage des trames du type mémoire de masse MS pour respectivement les transmettre sous forme Bluetooth à l'adaptateur en provenance de la carte ou sous forme de trames MS à la carte SD en provenance de l'adaptateur. L'opération inverse de flux de données est prévue dans le porte-badge, le cas échéant.

Préalablement à ces échanges, l'adaptateur prévoit de préférence d'effectuer un appairage des communications, notamment Bluetooth. A cet effet, l'adaptateur initie une troisième communication notamment de type courte portée, ici dans l'exemple de type NFC avec le porte-badge. L'adaptateur effectue également un appairage consistant à échanger des secrets ou clés permettant une communication sécurisée notamment Bluetooth. Alternativement, cet appairage peut être initié et géré par le porte badge.

L'invention permet d'éviter toute modification de l'unité de traitement 20 pour effectuer la sécurisation des échanges notamment par voie Bluetooth. En particulier, il n'y a aucune nécessité d'adaptation logicielle de l'unité de traitement. II suffit à l'utilisateur de connecter l'adaptateur à l'unité de traitement pour établir une communication sécurisée avec une des deux cartes du lecteur porte-badge.

## Revendications

1. Dispositif d'adaptation (DA) pour permettre un échange de données entre un objet de communication (OC, OC1, OC2) et une unité de traitement (UT, 10, 20) ledit dispositif d'adaptation comprenant :
- des moyens de déclaration d'information (DI) pour déclarer à l'unité de traitement des informations de capacités techniques (CCID, MS) lui permettant de sélectionner un pilote / moyen de communication approprié,
- des moyens de traitement de données (µC1, C1, C2, C3), lesdits moyens étant aptes à effectuer une adaptation de protocole d'échange et/ou de formats de données à échanger entre l'unité de traitement et l'objet de communication,
**caractérisé en ce que** lesdites capacités techniques déclarées par les moyens de déclaration sont relatives à un objet (OC, OC1, OC2) distinct du dispositif d'adaptation, lesdites capacités étant perçues par l'unité de traitement comme étant virtuellement relatives au dispositif d'adaptation (DA)

2. Dispositif selon la revendication précédente, **caractérisé en ce que** lesdites capacités techniques et/ou de format de données sont supportées par l'objet de communication lui même (OC).

3. Dispositif selon l'une quelconque des revendications précédentes, **caractérisé en ce que** lesdites capacités techniques et/ou de format de données sont supportées par un autre objet / composant (OC1, OC2, OC3, OC4) en relation avec l'objet de communication.

4. Dispositif selon l'une quelconque des revendications précédentes, **caractérisé en ce que** lesdites capacités techniques et/ou de format de données qu'il déclare à l'unité de traitement sont relatives à un type d'interface de carte à puce (CCID) et/ou à des fonctionnalités de stockage de masse (MS), de manière à pouvoir être virtuellement perçu et considéré par l'unité de traitement comme ayant ces capacités et/ou ces fonctionnalités.

5. Dispositif selon l'une quelconque des revendications précédentes, **caractérisé en ce qu'**il comprend des moyens (µC1, C1, 18a) pour initier et/ou établir un deuxième type de communication (BT) avec l'objet de communication.

6. Dispositif selon la revendication précédente, **caractérisé en ce qu'**il comprend des moyens d'appairage (AP) du deuxième type de communication (BT).

7. Dispositif selon la revendication précédente, **caractérisé en ce que** les moyens d'appairage sont effectués selon un troisième type de communication (NFC) courte moyenne portée.

8. Dispositif selon l'une des revendications 5 à 7, **caractérisé en ce que** le deuxième type de communication (BT) est de portée supérieure au troisième type de communication (NFC).

9. Procédé d'adaptation pour permettre un échange de données entre un objet de communication (OC, OC1, OC2) et une unité de traitement (UT, 10, 20), ledit procédé d'adaptation comprenant les étapes suivantes:
- de déclaration d'informations (DI) pour déclarer à l'unité de traitement des informations de capacités techniques (CCID, MS) lui permettant de sélectionner un pilote / moyen de communication approprié,
- de traitement de données, ledit traitement étant apte à effectuer une adaptation de protocole d'échange et/ou de formats de données à échanger entre l'unité de traitement et l'objet de communication,
**caractérisé en ce que** ladite information de capacités techniques déclarée par les moyens de déclaration est relative à un objet (OC, OC1, OC2) distinct du dispositif d'adaptation, lesdites capacités étant perçues par l'unité de traitement comme étant virtuellement relatives au dispositif d'adaptation.

10. Système de communication entre un objet de communication et une unité de traitement, comprenant :
- un objet de communication et/ou des composants (OC, OC1, OC2) en relation avec cet objet de communication ayant des capacités techniques,
- une unité de traitement (UT) apte à mettre en oeuvre ou sélectionner une communication appropriée en réponse à des informations reçues de capacités techniques,
- le dispositif d'adaptation (DA) selon l'une quelconque des revendications 1 à 8.
